# EUROPÄISCHE PATENTSCHRIFT

(11) **EP 1 691 027 B1**
(45) Veröffentlichungstag und Bekanntmachung des Hinweises auf die Patenterteilung: **11.09.2013**
(21) Anmeldenummer: 06002829.7
(22) Anmeldetag: 13.02.2006
(51) Int. Cl.: E04F 10/00, E06B 9/17, B23B 41/00, B28D 1/14

(54) **Verfahren zur Herstellung eines Rolladenkasten**
Method of manufacturing a roller shutter box
Procédé de fabrication d'un caisson-tunnel de volet roulant

(30) Priorität: 12.02.2005 DE 102005006453; 02.03.2005 DE 202005003328 U
(43) Veröffentlichungstag der Anmeldung: 16.08.2006
(73) Patentinhaber: Greisel Bauelemente GmbH, 91555 Feuchtwangen (DE)
(72) Erfinder: Liebert, Manfred, 86485 Biberbach (DE)
(74) Vertreter: Hübner, Gerd

(56) Entgegenhaltungen:
- EP-A- 0 763 646
- EP-A1- 0 263 001
- DE-A1- 3 335 890
- DE-A1- 3 720 837
- DE-U- 7 531 525
- DE-U1- 29 703 689
- DE-U1- 29 706 935
- JP-A- 2 109 617
- JP-A- 2003 071 827

## Beschreibung

Die Erfindung bezieht sich auf ein Verfahren zur Herstellung eines Rolladenkastens gemäß dem Oberbegriff des unabhängigen Anspruchs 1.

Ein solches Verfahren ist der EP 0 763 646 A2 zu entnehmen.

Rolläden dienen vorrangig der Sicherung von Fenstern, aber auch der Sicherung von Türen und Toren. Dabei werden die Rolläden unterhalb des entsprechenden Fenster-, Tür- oder Torsturzes auf einer Panzerwelle auf- und abgewickelt.

Üblicherweise wird die Welle mit dem Rolladenwickel von einem Kasten umgeben, dem so genannten Rolladenkasten, welcher unter dem jeweiligen Sturz eingemauert wird. Dabei hat der Rolladenkasten mehrere Funktionen. Er soll eine Verkleidung und eine Abdichtung bilden. Zur Erfüllung dieser Vorgaben hat der Rolladenkasten üblicherweise einen U-förmigen Querschnitt.

Zumeist muss der Rolladenkasten auch eine Halterung für die Welle und den Rolladenwickel tragen. Zum Antrieb der Welle sind verschiedene Einrichtungen bekannt. Der häufigst verwendete Antrieb ist ein von Hand gezogenes Band, das auf eine Scheibe wirkt. Die Scheibe sitzt auf einer Welle und hat etwa den maximalen Durchmesser des Wickels. Damit findet eine Übersetzung der Antriebskräfte statt. Es sind aber auch Motorantriebe bekannt.

Wie alle mechanischen Teile unterliegen die Welle, der Rolladenwickel bzw. die Rollade und die Betätigungseinrichtung für die Welle einem Verschleiß. Wartungen sind unvermeidlich. Deshalb muss der Rolladenkasten zugänglich bleiben.

Seit einiger Zeit bestehen vielerlei Bemühungen, Rolladenkästen aus unterschiedlichen Materialien herzustellen, insbesondere aus Kunststoffschaum. Bislang hat sich nur eine Herstellung aus Partikelschaum durchsetzen können, wobei der Partikelschaum aus kleinen Schaumpartikeln besteht, die in einer Form erhitzt werden, sodass sie expandieren und an den durch die Erhitzung plastifizierten Berührungsflächen miteinander verschweißen.

Alle Formkörper haben gemeinsam, dass ihre Festigkeit gering ist. Typische Formkörper aus Partikelschaum sind Platten aus Polystyrol-Hartschaumstoff und Verpackungsschaum.

Zur Erhöhung der Festigkeit ist es bekannt, in den Formen Stahldrähte bzw. Betonstahlmatten einzulegen. Die Stahldrähte sind in verschiedener Hinsicht für die Konstruktion problematisch: Sie müssen in die Form eingelegt werden. Das bedingt einen erheblichen Vorrichtungs- und Arbeitsaufwand. Die Drähte verhalten sich wie Fremdkörper im Kunststoffschaum. Eine Belastung der Drähte verursacht die Gefahr einer Schädigung des Kunststoffschaumes, indem der Draht aufgrund der wirksamen Kräfte wie ein Messer durch den Kunststoffschaum fährt, was zwangsläufig zu einer Zerstörung führt.

Neben dieser Herstellungsart auf der Basis von Partikelschaum bestehen weiterhin die traditionellen Herstellungsweisen, wobei die Wandungen des Rolladenkastens aus brettartigen Teilen aus Metall, Holz oder mehrkammerigen Kunststoffohlprofilen bestehen. Bei diesen herkömmlichen Rolladenkästen besteht der Nachteil, dass verhältnismäßig viele einzelne Querschnittsteile, insbesondere für einen weitgehend geschlossenen Kastenquerschnitt, erforderlich sind.

Zudem weisen die marktüblichen Rolladenkästen aufgrund der verwendeten Materialien oftmals eine.zu hohe Wärmeleitfähigkeit auf und werfen hinsichtlich einer späteren Entsorgung Probleme auf.

Die EP 0 763 646 A2 offenbart eine Ausbildung eines Rolladenkastens, bestehend aus einem einen Innenraum bindenden langgestreckten Kastenelement, welches an seiner Unterseite eine sich in Längsrichtung des Kastenelementes erstreckende schlitzförmige Öffnung zum Herausführen eines Rolladens aus dem Innenraum aufweist. Das Kastenelement ist aus einem Material hergestellt. welches zumindest Zement als Bindemittel sowie wenigstens einen Zuschlagstoff enthält.

Der Erfindung liegt die Aufgabe zugrunde, ein vereinfachtes Verfahren zur Herstellung eines Rolladenkasten aus Porenbeton vorzuschlagen.

Ein Verfahren entsprechend dem Patentanspruch 1 löst diese Aufgabe. Demnach besteht der Rolladenkasten aus einem armierten Porenbetonklotz als äußerem Kastenprofil, wobei der Rollraum mit Hilfe einer speziellen Bohranlage zentrisch seitwärts ausgebohrt wird. Die Bohranlage sieht zwei jeweils in einem Lagerrohr gelagerte, auf einer Achse einander gegenüberliegende Bohrvorrichtungen vor. Aufgrund dieser Ausgestaltung ist der Rolladenkasten produktionstechnisch sehr einfach herstellbar, da auf aufwändige Formkerne zur Ausbildung des Rollraums, wie dies beispielsweise bei dem in der DE 297 06 935 U1 offenbarte Rollokasten der Fall ist, verzichtet werden kann.

Bevorzugte Ausführungsformen des Verfahrens sind in den Unteransprüchen 2 bis 4 angegeben.

Unter Bezugnahme auf die Figuren 1 bis 3 soll nachfolgend ein erfindungsgemäß hergestellter Rolladenkasten beschrieben werden. Es zeigen
- Fig. 1: einen Rolladenkasten für eine geringe Mauerdicke,
- Fig. 2: einen Rolladenkasten für eine stärkere Mauerdicke, und
- Fig. 3: eine schematische Seitenansicht einer Bohranlage für den Rollraum eines Rolladenkastens.

Der Rolladenkasten umfasst ein äußeres Kastenelement (1), welches selbsttragend ausgebildet ist und eine Art inneres Kastenprofil (2), welches zusätzlich mit wärmedämmenden Material ausgestaltet werden kann.

Bevorzugt wird der erfindungsgemäß hergestellte Rolladenkasten für die Mauerdicken zwischen 20 cm und 60 cm hergestellt, jeweils mit einer bevorzugten Höhe zwischen 20 und 40 cm, einer Wanddicke zwischen 2 und 5 cm und in Längen mit bis zu 300 cm.

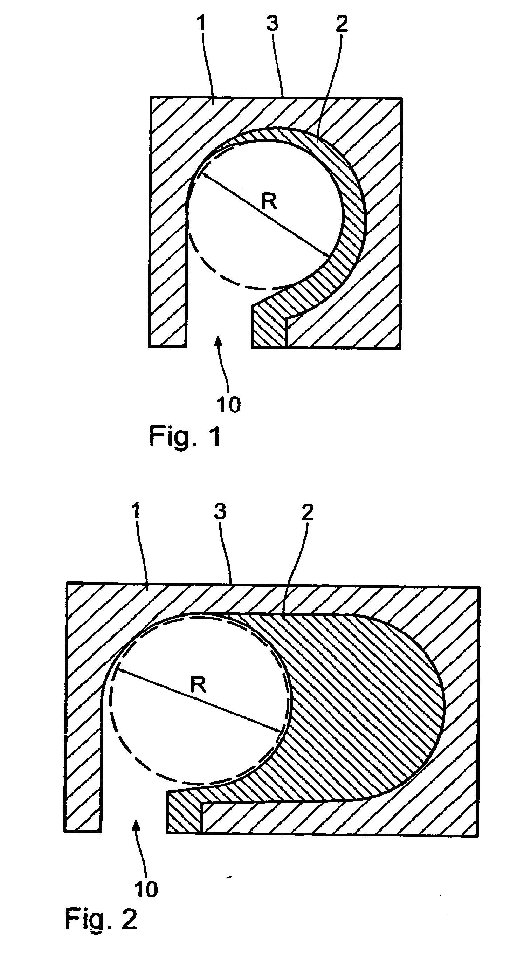

Als Material dient ein armierter Porenbetonklotz (3). In Figur 1 und 2 ist erkennbar, dass der Rolladenkasten aus einem einzigen Porenbetonklotz (3) gefertigt wird.

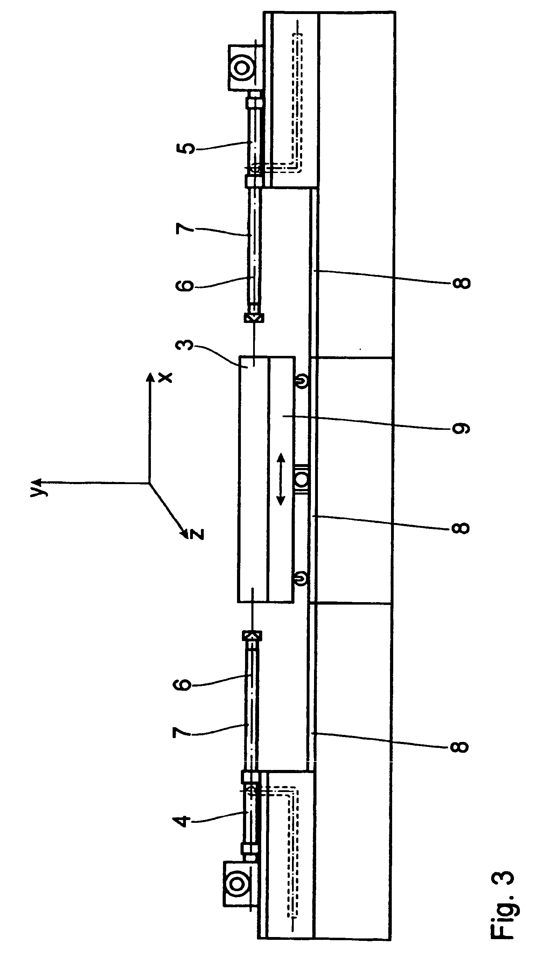

Die Porenbetonklötze können lediglich mit Hilfe der in Figur 3 abgebildeten speziellen Bohranlage bearbeitet werden. Diese Bohranlage besteht aus zwei stationären Bohrmaschinen (4) und (5) mit identischen Bohrwerkzeugen, wobei die Bohrwerkzeuge zueinander auf einer gemeinsamen Achse zentrisch ausgerichtet sind und die Bohrerwelle (6) in einem stabilen Rohr, dem so genannten Lagerrohr (7), gelagert ist. In den zwei einander auf einer Achse gegenüberliegenden Lagerrohren (7) ist jeweils eine Bohrvorrichtung (6) gelagert. Die Lagerrohre (7) sind mit einer Absaugeinrichtung ausgestattet und befinden sich auf ihrer Achse in einem Abstand von mehr als 2500 mm.

Der zu bearbeitende Porenbetonklotz (3) wird auf einem sich zwischen den Bohrern befindlichen Werkzeugtisch (9) aufgelegt und in der Y-Achse und Z-Achse fixiert, wobei die X-Achse die Bohrachse darstellt. Der Tisch (9) ist auf Schienenelementen (8) in beiden X-Achsenrichtungen zu den Bohrwerkzeugen fahrbar. Zum Bohren von Langlöchern wird das Oberteil des Werkzeugtisches (9) in der Z-Achse verschoben. Der benötigte Rollraum (R) wird mittels der beschriebenen Bohrmaschinen (4, 5) durch zentrische und seitwärts angesetzte Bohrtätigkeit aufgebohrt. Die zur Ausbohrung des Rollraums führenden Bohrvorgänge finden dabei sowohl simultan als auch nicht simultan statt.

Als weiteren Arbeitsgang werden, je nachdem ob es sich um einen geschlossenen oder offenen Rolladenkasten handelt, die Öffnung (10) auf der unteren Seite des Rolladenkastens mittels eines speziellen Bearbeitungswerkzeugs ausgeschnitten. Der Rolladenkasten wird anschließend mit der für das innere Kastenprofil (2) bestimmten zusätzlichen Dämmung, sowie den seitlichen Stirnseiten mit den Lagerhaltern und dem Gurtauslass bestückt.

Der erfindungsgemäß hergestellte Rolladenkasten verfügt aufgrund des verwendeten Materials über den Vorteil einer sehr hohe Wärmedämmung. Kaum ein anderer massiver Wand-Baustoff besitzt eine vergleichbare Wärmeleitfähigkeit wie Porenbeton. Die geringe Wärmeleitfähigkeit entsteht durch eine Vielzahl kleiner Luftporen im Porenbeton.

Die DIN 4108 enthält Anforderungen an die Wärmedämmung und Wärmespeicherung sowie wärmeschutztechnische Hinweise für die Planung und Ausführung in der Bauphysik. Porenbeton besitzt durchweg eine geringere Wärmeleitfähigkeit als dies die Norm DIN 4108 Teil 4 fordert.

Im so genannten inneren Kastenprofil (2) kann eine zusätzliche Wärmedämmung mittels in Form geschnittener Schaumstoffe wie Styrodur oder ähnlichen Dämmstoffen in unterschiedlichen Dicken eingebaut werden.

## Patentansprüche

1. Verfahren zur Herstellung eines Rolladenkastens, **dadurch gekennzeichnet, dass** der Rollraum (R) aus einem armierten Porenbetonklotz (3) mit Hilfe einer speziellen Bohranlage entsteht, wobei mittels zweier in einem Lagerrohr (7) gelagerter, auf einer Achse einander gegenüberliegender Bohrvorrichtungen (4, 5) zentrisch seitwärts ausgebohrt wird.

2. Verfahren nach Anspruch 1, **dadurch gekennzeichnet, dass** während der Bohrvorgänge über die Lagerrohre (7) ausgebohrtes Material abgesaugt wird.

3. Verfahren nach Anspruch 1 oder 2, **dadurch gekennzeichnet, dass** die zur Ausbohrung des Rollraums (R) führenden Bohrvorgänge simultan stattfinden.

4. Verfahren nach Anspruch 1 oder 2, **dadurch gekennzeichnet, dass** die zur Ausbohrung des Rollraums (R) führenden Bohrvorgänge nicht simultan stattfinden.

## Claims

1. Method of manufacturing a roller shutter box, **characterised in that** the roller area (R) made of a reinforced aerated concrete block (3) is formed by means of a special boring tool, wherein the boring is performed centrally laterally by means of two boring devices (4, 5) mounted in a support pipe (7) and arranged opposite one another on an axis.

2. Method according to claim 1, **characterised in that** during the boring processes drilled material is extracted via the support pipes (7).

3. Method according to claim 1 or 2, **characterised in that** the boring processes leading to the boring of the roller area (R) take place simultaneously.

4. Method according to claim 1 or 2, **characterised in that** the boring processes leading to the boring of the roller area (R) do not take place simultaneously.

## Revendications

1. Procédé pour fabrication d'un caisson de volet roulant **caractérisé en ce que** l'espace d'enroulement (R) est formé d'un bloc de béton poreux armé (3) à l'aide d'une installation de perçage spéciale, où on perce par rapport au centre, sur les côtés, au moyen de deux dispositifs de perçage (4, 5), situés l'un en face de l'autre sur un axe, logés dans un tube de logement (7).

2. Procédé selon la revendication 1 **caractérisé en ce que**, pendant les processus de perçage, le matériau provenant du perçage est aspiré par l'intermédiaire des tubes de logement (7).²

3. Procédé selon les revendications 1 ou 2 **caractérisé en ce que** les processus de perçage principaux ont lieu simultanément pour le perçage de l'espace d'enroulement (R).

4. Procédé selon les revendications 1 ou 2 **caractérisé en ce que**, pour le perçage de l'espace d'enroulement (R), les processus de perçage principaux n'ont pas lieu simultanément.
